# EUROPEAN PATENT APPLICATION

(11) **EP 2 682 181 A1**
(43) Date of publication of application: **08.01.2014**
(21) Application number: 13178070.2
(22) Date of filing: 26.02.2010
(51) Int. Cl.: B01J 2/14

(54) **Sintered lightweight aggregates**

(30) Priority: 06.03.2009 GB 0903900; 06.03.2009 GB 0903901; 06.03.2009 GB 0903902; 06.03.2009 GB 0903903
(62) Divisional of application: 10710612.2
(71) Applicant: Lytag Limited, Escrick, York YO19 6ET (GB)
(72) Inventor: DOEL, Andrew, Lincoln, LN6 0XU (GB)
(74) Representative: Evans, Huw David Duncan

(57) **Abstract**

An apparatus and method for producing a lightweight building aggregate from waste fly ash material has inputs 11, 12 for respectively receiving dry and conditioned fly ash according to the supply and demand of the material. The fly ash is then mixed in a pelletiser 23 with water from a heater 24, which aids the production of satisfactory pellets. The output of the pelletiser 23 is initially diverted away from further processing by a conveyor 29, so that unsatisfactory pellets produced at start-up are collected and recycled. Finally, a rotary drum 36 serves to prevent oversized pellets from reaching the sinter strand 31, where they may explode or cause unsatisfactory sintering.

## Description

This application is divided from European Patent Application No 10710612.2 and relates to lightweight aggregates produced by sintering furnace or so-called fly ash.

Fly ash is a fine residue recovered from the gasses of burning coal during the production of electricity. It can be difficult and costly to dispose of the large quantities of fly ash that are produced, particularly due to controls on the disposal of such materials in landfill sites. However, it has been discovered that the fly ash can be used to form aggregates or cementitious materials and it will be appreciated that such use avoids the difficult and costly disposal procedures.

A typical manufacturing plant for producing lightweight aggregates from fly ash comprises a hopper for storing pulverised fly ash and a screw-conveyor for delivering controlled quantities of the pulverised fly ash to a mixer unit, where it is mixed with a certain amount of water. The slurry-like mixture is then fed by a conveyor at a controlled speed into a pelletiser, which rotates around an inclined axis such that the mixture is formed into pellets which are eventually discharged from the pelletiser by continued rotation thereof.

The pellets are then conveyed to a sintering device, such as a sinter strand, where they are formed into a bed on top of a movable grate or mesh. The bed of material, which contains carbon, is then is ignited from above and moved away from the ignition source over a downdraft, which causes the ignition to propagate downwardly through the bed of material in a controlled manner to fully combust the material. The resultant combusted material is both strong and lightweight and thereby lends itself to use as an aggregate for the building industry.

A disadvantage of the above-mentioned process for making lightweight aggregates from sintered fly ash is that there may be a mismatch between the supply of fly ash from the electrical power station and the demand of the lightweight aggregate plant. For example, at times of high electrical output a surplus of fly ash is produced and this may occur at times when the demands on the lightweight aggregate plant are low. Conversely, high demands on the lightweight aggregate plant may occur when the output of electricity and hence the supply of fly ash is low.

A first problem of the above-mentioned existing process for making lightweight aggregates from sintered fly ash is that the surplus fly ash either has to be disposed of or stored in a location where none will blow away and contaminate the surrounding environment. Hitherto, this problem has been solved by adding water to the fly ash to allow for stockpiling or land filling in a conditioned form for disposal by sluicing into settling ponds or lagoons. An advantage of conditioning fly ash in this way is that it reduces any risk of the fly ash being blown away. However, surplus water from lagoons and lakes of conditioned fly ash can pollute the water table and surrounding environment.

European Patent Application No 10710612.2, from which this application is divided, discloses an apparatus for producing lightweight aggregate which alleviates the above-mentioned problems and comprises a pelletiser, means for mixing pulverised fly ash with water and means for feeding the mixture to the pelletiser, wherein means are also provided feeding conditioned fly ash to the pelletiser.

The ability of the apparatus to use either pulverised or conditioned fly ash enables aggregate to be produced from pulverised or conditioned fly ash when demands on aggregate are high compared with electrical output, thereby utilising any conditioned fly ash that is produced when demands on aggregates are low compared with electrical output.

The mixing means may be arranged to receive pulverised and conditioned fly ash, said feeding means being arranged to feed the pelletiser from the output of the mixer. In this manner the mixer can mix pulverised with conditioned fly ash if the water content of the conditioned fly ash is too high. Alternatively, the mixer can mix conditioned fly ash with water if the water content of the conditioned fly ash is too low.

Alternatively or additionally means may be provided for drying the conditioned fly ash if the water content is too high. The drying means preferably uses waste energy recovered from a sintering device of the apparatus.

Means may be provided for determining the water content of the conditioned fly ash.

European Patent Application No 10710612.2 also discloses a method of producing a lightweight aggregate, the method comprising providing a source of pulverised fly ash, providing a source of conditioned fly ash and optionally feeding pulverised or conditioned fly ash to a pelletiser, wherein water is mixed with the pulverised fly ash prior to feeding the latter to the pelletiser.

The water content of the conditioned fly ash may be determined prior to feeding it to the pelletiser.

Water may be added to the conditioned fly ash if the water content is too low.

The conditioned fly ash may be mixed with pulverised fly ash if the water content is too high. Alternatively, the conditioned fly ash may be dried, for example using waste energy from a sintering device of the apparatus.

The pulverised fly ash, water and conditioned fly ash may be fed into a mixer disposed upstream of the pelletiser.

A further problem of the above-mentioned existing process for making lightweight aggregates from sintered fly ash is that the pelletisation process is difficult and lengthy, with the result that there is a risk of producing pellets of unsatisfactory size, shape and consistency.

A separate European application divided from European Patent Application No 10710612.2 and filed concurrently with the present application discloses an apparatus for producing lightweight aggregate which alleviates the above-mentioned problem and which comprises a pelletiser for forming pellets using fly ash and water, wherein means are provided for heating the water.

We have found that the use of heated water reduces surface tension and thereby makes pelletisation easier and faster.

The heating means may be arranged to heat the water to between 15 and 25 degrees centigrade.

The apparatus may comprise a device for sintering the pellets produced by the pelletiser, said heating means being arranged to heat the water using waste energy recovered from the sintering device.

The heated water may be fed directly to the pelletiser.

The apparatus may comprise means for mixing pulverised fly ash with water and means for feeding the mixture to the pelletiser, wherein said heating means may alternatively or additionally be arranged to heat the water fed to the mixer.

Means may also provided feeding conditioned fly ash to the pelletiser.

The mixing means may be arranged to receive pulverised and conditioned fly ash, said feeding means being arranged to feed the pelletiser from the output of the mixer. In this manner the mixer can mix pulverised with conditioned fly ash if the water content of the conditioned fly ash is too high. Alternatively, the mixer can mix conditioned fly ash with water if the water content of the conditioned fly ash is too low.

Alternatively or additionally means may be provided for drying the conditioned fly ash if the water content is too high. The drying means preferably uses waste energy recovered from a sintering device of the apparatus.

Said separate European application divided from European Patent Application No 10710612.2 also discloses a method of producing a lightweight aggregate, the method comprising heating water and forming pellets in a pelletiser using fly ash and said heated water.

The water may be heated to between 15 and 25 degrees centigrade.

The water may be heated using waste energy recovered from a sintering device of the apparatus.

The heated water is may be fed directly to the pelletiser.

Pulverised fly ash may be mixed with water in a mixer and fed to the pelletiser, wherein the water fed to the mixer is alternatively or additionally heated.

The conditioned fly ash may be fed to the pelletiser.

The pulverised fly ash, water and conditioned fly ash may be fed into the mixer upstream of the pelletiser.

A further problem of the above-mentioned existing process for making lightweight aggregates from sintered fly ash is that the pellets formed by the pelletiser need to have a uniform shape and consistency, otherwise unsatisfactory aggregate is formed by the subsequent sintering process. Moreover, if unsatisfactory pellets are produced, there is a risk that the pellets could damage or clog the apparatus and hold up production.

We have also devised an apparatus for producing lightweight aggregate which alleviates the above-mentioned problem.

In accordance with the present invention, there is provided an apparatus for producing a lightweight aggregate, the apparatus comprising a pelletiser for forming pellets of fly ash and a sintering device for sintering the pellets, wherein means are provided between the pelletiser and the sintering device for diverting the output of the pelletiser away from the sintering device for a period following start-up of the pelletiser.

We have realised that the majority of unsatisfactory pellets that are produced by the pelletiser are formed following start-up of the pelletiser. Accordingly, the diversion of the initial output of the pelletiser away from the sintering device helps to avoid the above-mentioned problem.

The diversion means may comprise a flap or a valve. The diversion means may be mounted in a chute through which the output of the pelletiser falls. Alternatively, the diversion means may be mounted on a conveyor which carries the output of the pelletiser. Alternatively, the diversion means may comprise a conveyor which carries the output of the pelletiser in one direction to the sintering device and in a reverse direction away from the sintering device, the output of the pelletiser being fed onto the conveyor intermediate its opposite ends.

Preferably, the diversion means is arranged to divert the output of the pelletiser away from the sintering device for a predetermined time period following start-up of the pelletiser.

Alternatively, the diversion means is arranged to divert the output of the pelletiser away from the sintering device for a period following start-up of the pelletiser which is controlled by a sensor arranged to monitor the quality of the pellets output from the pelletiser.

Preferably the apparatus comprises an input for re-introducing the initial output of the pelletiser back into the pelletiser.

Preferably the apparatus comprises means for processing the initial output of the pelletiser to form a suitable input for applying to the pelletiser.

Also in accordance with the present invention, there is provided a method of producing a lightweight aggregate, the method comprising adding fly ash to a pelletiser to produce an output for feeding to a sintering device, and diverting the output of the pelletiser away from the sintering device for a period following start-up of the pelletiser.

Preferably, the output of the pelletiser is diverted away from the sintering device for a predetermined time period following start-up of the pelletiser.

Alternatively, the quality of the pellets output from the pelletiser is monitored and the output of the pelletiser diverted away from the sintering device for a period until the output of the pelletiser is of a satisfactory quality.

Preferably the initial output of the pelletiser is re-introduced into the pelletiser.

Preferably the initial output of the pelletiser is processed or mixed to form a suitable input for re-introducing into the pelletiser.

A further problem of the above-mentioned existing process for making lightweight aggregates from sintered fly ash is that the pellets formed by the pelletiser need to have a uniform shape and consistency otherwise unsatisfactory aggregate is formed by the subsequent sintering process. Moreover, if unsatisfactory pellets are produced, there is a risk that the pellets could damage or clog the apparatus and hold up production.

A further separate European application divided from European Patent Application No 10710612.2 and filed concurrently with the present application discloses an apparatus for producing lightweight aggregate which alleviates the above-mentioned problem and which comprises a pelletiser for forming pellets of fly ash and a sintering device for sintering the pellets, wherein means are provided between the pelletiser and the sintering device for diverting the output of the pelletiser away from the sintering device if the output contains pellets which outside a predetermined range of sizes.

The diversion of unsatisfactory pellets away from the sintering device helps to avoid the above-mentioned problem.

The diversion means may be arranged to divert pellets that are above a predetermined size away from the sintering device. The exclusion of pellets above a certain size prevents them from being loaded into the sintering device where there is a risk that they can explode and form dust or discontinuities inside the device.

The diversion means may comprise a flap or a valve which is controlled by the output of a sensor arranged to monitor the size of the pellets output from the pelletiser.

Alternatively, the diversion means may comprise a device which excludes pellets which are outside the predetermined range of sizes.

The exclusion device may comprise apertures which are dimensioned to exclude pellets above a predetermined size away from the pelletiser.

The apertures may be formed in a moving portion of the exclusion device. The apertures may be formed in the side wall of a rotating drum such that the smaller particles fall through the apertures in the side wall of the drum for feeding to the sintering device. The larger particles are carried completely along the length of the drum where they are collected.

The apparatus may comprise an input for re-introducing the diverted output of the pelletiser back into the pelletiser.

The apparatus may comprise means for processing the diverted output of the pelletiser to form a suitable input for applying to the pelletiser.

Said further separate European application divided from European Patent Application No 10710612.2 also discloses a method of producing a lightweight aggregate, the method comprising adding fly ash to a pelletiser to produce an output for feeding to a sintering device, and diverting the output of the pelletiser away from the sintering device if the output contains pellets which are outside a predetermined range of sizes.

Pellets that are above a predetermined size may be diverted away from the sintering device.

The size of the pellets output from the pelletiser is monitored and the output of the pelletiser diverted away from the sintering device if the output contains pellets which are outside the predetermined range of sizes.

Alternatively, the output from the pelletiser is fed to a device which excludes pellets which are outside the predetermined range of sizes.

The diverted output of the pelletiser may be re-introduced into the pelletiser.

The diverted output of the pelletiser may be processed or mixed to form a suitable input for re-introducing into the pelletiser.

An embodiment of the present invention will now be described by way of example only and with reference to the accompanying drawings, in which:
Figure 1 is a schematic diagram of the first stage of an embodiment of apparatus in accordance with the present invention for producing a lightweight aggregate;
Figure 2 is a schematic diagram of the second stage of the apparatus of Figure 1; and
Figure 3 is a sectional view of a sorting device of the apparatus of Figure 1.

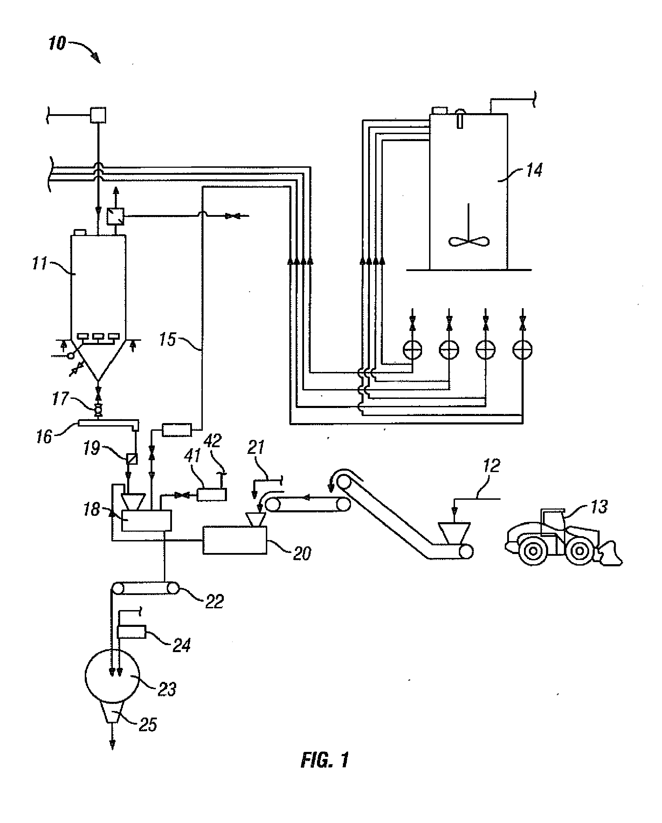

Referring to Figure 1 of the drawings, there is shown a first stage of an apparatus in accordance with all aspects of the present invention for producing a lightweight aggregate from sintered fly ash. The apparatus comprises a plurality of identical input stages e.g. 10 connected in parallel. The number of operational input stages 10 can be selected as desired to suit demand.

Each stage comprises a silo 11 for storing dry pulverised fly ash and an input 12 for receiving wet conditioned fly ash, which can be delivered to the apparatus using a plant machine 13. A tank 14 for storing liquid additive is arranged to supply additive to each stage via respective ducts 15.

The output of the silo 11 is connected by a valve 17 to a screw-conveyor 16 which delivers the pulverised fly ash to a pin mixer 18 via a device 19 which weighs the quantity of pulverised fly ash being delivered. The input 12 for conditioned fly ash delivers the conditioned fly ash to a mixer 20, where it can be mixed with water delivered by water inlet 21. In accordance with the first aspect of the present invention, the outlet of the conditioned fly ash mixer 20 can be fed into the inlet of the mixer 18 in parallel with the pulverised fly ash from the hopper 11.

The apparatus can selectively use pulverised and/or conditioned fly ash, thus enabling aggregate to be produced from pulverised or conditioned fly ash when demands on aggregate are high compared with electrical output. In this manner, any conditioned fly ash that is produced when demands on aggregates are low compared with electrical output is utilised.

The mixer 18 can mix pulverised with conditioned fly ash if the water content of the conditioned fly ash is too high. Alternatively, the mixer 18 can mix conditioned fly ash with water if the water content of the conditioned fly ash is too low. A drier (not shown) may be provided for drying the conditioned fly ash if the water content is too high. The drier may use waste energy recovered from a sintering device of the apparatus, which will be described hereinafter. A device (not shown) may be provided for determining the water content of the conditioned fly ash prior to feeding it to the mixer 20, where water can be added if the water content is too low.

A controlled amount of water is fed into the mixer 18 via inlet 42 and optionally via a heater 41 which heats the water to between 15 and 25 degrees centigrade, for example using heat recovered from a sintering device of the apparatus. The ducts 15 carrying liquid additive also fed into the mixer 18. The output of the mixer 18 is fed at a controlled rate into a pan pelletiser 23 via a conveyor 22. In accordance with the second aspect of the present invention, water is fed into the pelletiser 23 via a heater 24 which heats the water to between 15 and 25 degrees centigrade, for example using heat recovered from the sintering device of the apparatus.

The pan pelletiser 23 rotates about an inclined generally upright rotary axis and, in use, the output from the mixer 18 forms into pellets which are eventually discharged from the pelletiser 23 into a collection chute 25. The addition of the hot water reduces surface tension and thereby makes pelletisation easier and faster.

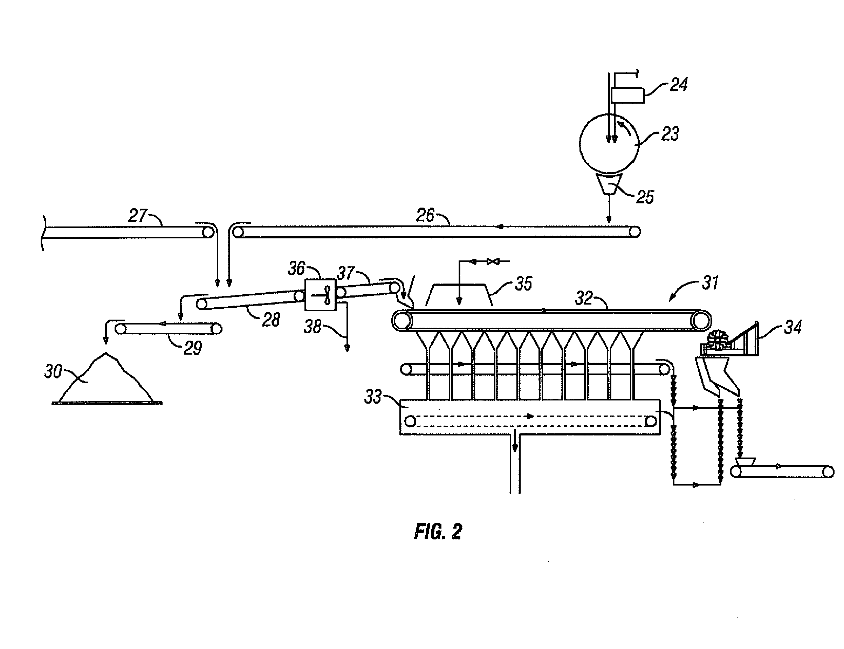

Referring to Figure 2 of the drawings, the output of the pelletiser chute 25 falls on to a conveyor 26, which also receives the output from chutes of other input stages arranged in parallel with the input stage 10. Additional conveyors 27 may receive the output from chutes of other input stages.

In accordance with the third aspect of the present invention, the output from the or each conveyor 26,27 falls onto a collection conveyor 28, which is controlled to run in a reverse direction for a period after start up of any input stage e.g. 10. In this manner, any unsatisfactory pellets that are produced during start up fall onto a conveyor 29, which carries them to a point where they are discharged to form a pile 30. Material from the pile 30 may be re-introduced into the apparatus as conditioned fly ash via the input 12.

Once a suitable time period has elapsed, the conveyor 28 runs forwardly to carry the pellets to a sorting device 36 arranged to only allow pellets below a certain size to move onto a conveyor 37 which carries the pellets to the sintering device 31.

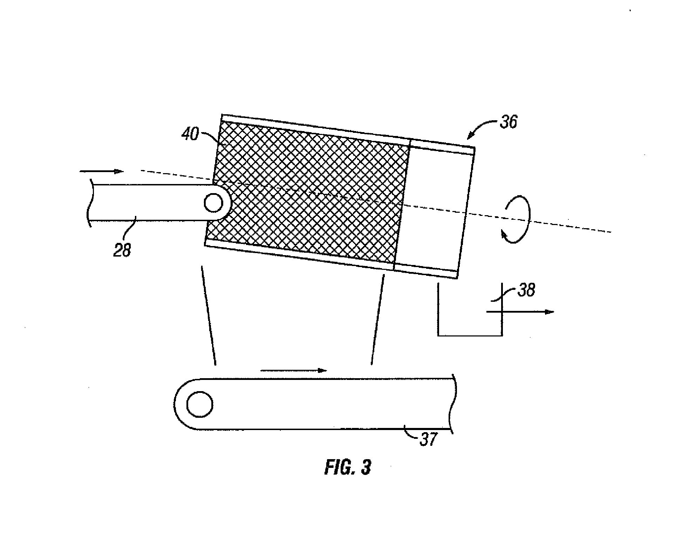

Referring to Figure 3 of the drawings, the sorting device 36 comprises a rotary-mesh 40 drum arranged for rotation at a downwardly-inclined angle of approximately 20 degrees to the horizontal. In accordance with the fourth aspect of the present invention, the output of the conveyor 28 is fed into the upper end of the drum 40, whereupon smaller particles fall through the apertures in the side wall of the drum 40 as they are carried towards the opposite end thereof. The smaller particles are collected by the conveyor 37 and carried to the sintering device 31. The larger particles are carried completely along the length of the drum 40 where they fall into an output chute 38 which delivers them to another pile of material, which can be re-introduced into the apparatus as conditioned fly ash via the input 12.

Referring to again to Figure 2 of the drawings, at the sintering device 31, the pellets are loaded into carriages (not shown) mounted on a conveyor 32. The pellets are loaded into each carriage to form a bed of pellets of uniform depth. Each carriage has opposite side and end walls, an open top and a bottom wall formed of a mesh or a grate. The carriages then advance along the conveyor 32 under an ignition hood 35, which ignites the upper layer of the pellet bed. A fan unit 33 draws air through the conveyor 32 and carriages to create a downdraft which causes the ignition of the pellets to slowly propagate downwardly through the bed of each carriage at a controlled rate.

The exclusion by the sorting device 36 of pellets above a certain size prevents them from being loaded into the sintering carriages where there is a risk that they can explode and form dust or discontinuities in the pellet bed.

At the end of the conveyor 32, the combustion of the pellets is complete and the resultant for material can be collected at the hopper 34 for use as a lightweight aggregate.

## Claims

1. An apparatus for producing a lightweight aggregate, the apparatus comprising a pelletiser for forming pellets of fly ash and a sintering device for sintering the pellets, wherein means are provided between the pelletiser and the sintering device for diverting the output of the pelletiser away from the sintering device for a period following start-up of the pelletiser.

2. An apparatus as claimed in claim 1, in which the diversion comprises a flap or a valve.

3. An apparatus as claimed in claim 1 or 2, in which the diversion means is mounted in a chute through which the output of the pelletiser falls.

4. An apparatus as claimed in claim 1 or 2, in which the diversion means is mounted on a conveyor which carries the output of the pelletiser.

5. An apparatus as claimed in claim 1 or 2, in which, the diversion means comprises a conveyor which carries the output of the pelletiser in one direction to the sintering device and in a reverse direction away from the sintering device, the output of the pelletiser being fed onto the conveyor intermediate its opposite ends.

6. An apparatus as claimed in any of claims 1 to 5, in which the diversion means is arranged to divert the output of the pelletiser away from the sintering device for a predetermined time period following start-up of the pelletiser.

7. An apparatus as claimed in any of claims 1 to 5, in which the diversion means is arranged to divert the output of the pelletiser away from the sintering device for a period following start-up of the pelletiser, which period is controlled by a sensor arranged to monitor the quality of the pellets output from the pelletiser.

8. An apparatus as claimed in any of claims 1 to 7, in which the apparatus comprises an input for re-introducing the initial output of the pelletiser back into the pelletiser.

9. An apparatus as claimed in claim 8, in which the apparatus comprises means for processing the initial output of the pelletiser to form a suitable input for applying to the pelletiser.

10. An apparatus as claimed in any of claims 1 to 9, in which means are provided between the pelletiser and the sintering device for diverting the output of the pelletiser away from the sintering device if the output contains pellets which outside a predetermined range of sizes.

11. A method of producing a lightweight aggregate, the method comprising adding fly ash to a pelletiser to produce an output for feeding to a sintering device, and diverting the output of the pelletiser away from the sintering device for a period following start-up of the pelletiser.

12. A method as claimed in claim 11, in which the output of the pelletiser is diverted away from the sintering device for a predetermined time period following start-up of the pelletiser.

13. A method as claimed in claim 11, in which the quality of the pellets output from the pelletiser is monitored and the output of the pelletiser diverted away from the sintering device for a period until the output of the pelletiser is of a satisfactory quality.

14. A method as claimed in any of claims 11 to 13, in which the initial output of the pelletiser is re-introduced into the pelletiser.

15. A method as claimed in claim 14, in which the initial output of the pelletiser is processed or mixed to form a suitable input for re-introducing into the pelletiser.
